# EUROPEAN PATENT SPECIFICATION

(11) **EP 3 493 336 B1**
(45) Date of publication and mention of the grant of the patent: **07.09.2022**
(21) Application number: 17204338.2
(22) Date of filing: 29.11.2017
(51) Int. Cl.: H01R 31/08, H02M 7/00, H01R 12/71, H01R 43/16

(54) **A MALE ELECTRICAL CONNECTOR FOR A VOLTAGE CONVERTER**
MÄNNLICHER ELEKTRISCHER VERBINDER FÜR EINEN SPANNUNGSWANDLER
CONNECTEUR ÉLECTRIQUE MÂLE POUR UN CONVERTISSEUR DE TENSION

(43) Date of publication of application: 05.06.2019
(73) Proprietor: Valeo Siemens eAutomotive Norway AS, 3036 Drammen (NO)
(72) Inventor: BOBERG, Oyvind, 3022 Drammen (NO); DRAUGEDALEN, Eirik, 0651 Oslo (NO); SØRSDAHL, Torbjørn, 3044 Drammen (NO)
(74) Representative: Valeo Powertrain Systems

(56) References cited:
- EP-A1- 1 487 054
- EP-A1- 2 639 890
- CN-U- 203 631 781
- JP-A- S6 460 978
- US-A- 5 609 505

## Description

### FIELD OF ART

The present invention relates to voltage converters, in particular for use in an electrical or a hybrid vehicle, and relates more particularly to a male electrical connector configured for electrically connecting a first printed circuit board and a second printed circuit board of a voltage converter, said voltage converter forming in particular a battery charger.

The invention aims more precisely at providing a male electrical connector that is advantageously small and easy to use, that allows transferring high current at medium and high frequencies and that can provide tolerances while connecting a first printed circuit board and a second printed circuit board.

### STATE OF THE ART

Document EP1487054A1 discloses a conventional male electrical connector. In today's existing electrical or hybrid vehicles, the propulsion system comprises a high-voltage power supply battery that delivers a supply voltage to an electrical motor for the propulsion of the vehicle. In order to charge said battery, the propulsion system comprises a voltage converter forming a battery charger called "On-Board Charger" (OBC) that is configured to be connected to an Alternating Current (AC) electrical network, such as e.g. a local or a national power grid.

Such On-Board Charger converts one or several alternating currents received from the AC electrical network into a direct current that allows charging the battery. To this end, the On-Board Charger comprises a plurality of internal components such as e.g. one or several transformers, one or several inductors, one or more diodes, one or more transistors, etc. These internal components are mounted on one or several Printed Circuit Boards (PCBs) which are placed in a housing equipped with an AC input connector and a DC output connector and which may further be mounted onboard a vehicle.

When the On-Board Charger comprises several PCBs stacked on top of each other into the housing, it may be necessary to electrically connect each PCB to the adjacent one(s). In a known solution, such connection is performed using a set of cylindrical metallic screw connectors. However, such a set of screw connectors requires significant space on the PCB, which reduces the space for other components. Moreover, such a set of screw connectors does not allow to visually confirm that the insertion and control of the connectors is performed correctly. Furthermore, such a set of screw connectors may not accommodate occurring deviations and needs tolerance stack-up analysis to be performed. Additionally, this solution implies critical tolerance issues as two PCBs that need to be fixed are not flexible.

Therefore, there is a need for a voltage converter solution, in particular a battery charger solution, which is easy to design, which provides an efficient electrical connection between two PCBs, which allows conveying high currents at high frequencies and which takes into account mechanical tolerances.

### SUMMARY

The present invention relates to a male electrical connector configured for electrically connecting a first printed circuit board and a second printed circuit board of a voltage converter, said male electrical connector being U-shaped and comprising a first end and a second end, said first end and said second end being configured respectively for being connected to a female electrical connector mounted on the first printed circuit board and to a female electrical connector mounted on the second printed circuit board.

The male electrical connector according to the invention advantageously allows connecting a first circuit printed board and a second circuit printed board in a very efficient and quick manner. Moreover, the flexibility of the male electrical connector allows to cope easily with tolerances.

In a preferred embodiment, the U-shaped male electrical connector comprises a central portion and two leg portions extending perpendicularly to said central portion.

Advantageously, the central portion and the two leg portions have a rectangular cross-section.

According to an embodiment, the two leg portions are flat. In other words, the width of the rectangular cross-section of the two leg portions is significantly greater, for example more than ten times, than its thickness. Such shape allows the male electrical connector to transfer high currents at high frequencies.

According to the invention, the male electrical connector comprises two electrically conducting layers. One electrically conducting layer is external and the other electrically conducting layer is internal.

In an embodiment, the external electrically conducting layer is connected to the internal electrically conducting layer through a connecting part.

In the invention the male electrical connector comprises an electrically isolating layer arranged between the external electrically conducting layer and the internal electrically conducting layer. Indeed, as mainly the outer external part of an electrically conducting layer allows conducting high frequency currents (this phenomena is called the skin effect), the use of two electrically conducting layers separated by an electrically isolating layer allows increasing the efficiency for conducting currents, in particular high frequency currents (e.g. around or above 160 kHz).

According to an aspect of the present invention, the two leg portions have a different length for connecting the first printed circuit board and the second printed circuit board, the length difference between the two legs defining the spacing between the first printed circuit board and the second printed circuit board.

According to an embodiment, each of the first end and the second end of the leg portions comprises at least one chamfer portion, allowing therefore inserting easily the U-shaped male electrical connector into the female electrical connectors.

Advantageously, the assembly comprising the first printed circuit board and the second printed circuit board is configured for converting an alternating phase current into a direct current.

According to an embodiment, the male electrical connector is a one-piece element, i.e. a one-piece male electrical connector.

According to an embodiment, the male electrical connector is made of a metal material, such as e.g. nickel plating brass.

The invention also relates to a voltage converter for converting at least one alternating phase current into a direct current (and/or vice-versa), in particular for use in an electrical or hybrid vehicle, said voltage converter comprising a housing and at least a first printed circuit board and a second printed circuit board, said second printed circuit board being arranged on top of said first printed circuit board into said housing, each of the first printed circuit board and the second printed circuit board comprising a female electrical connector, the voltage converter comprising at least one male electrical connector, as previously described, electrically connecting the female electrical connector of the first printed circuit board and the female electrical connector of the second printed circuit board.

Advantageously, an opening is formed in the second printed circuit board and the male electrical connector electrically connects the female electrical connector of the first printed circuit board and the female electrical connector of the second printed circuit board through said opening.

In an embodiment, the voltage converter forms a battery charger, in particular for charging a battery mounted onboard a vehicle from an outer electrical network.

The invention also concerns an electrical or a hybrid vehicle comprising an onboard voltage converter as previously described.

The invention also concerns a method for manufacturing a male electrical connector as previously described, said method comprising the steps of:
- folding in half a sheet element comprising an electrically isolating layer arranged on top of an electrically conducting layer so as to obtain a folded sheet element comprising two electrically conducting layers and an electrically isolating layer arranged between said two electrically conducting layers,
- folding the folded sheet element into a U-shaped male electrical connector.

Advantageously, the method comprises, for example between the two folding steps, a step of forming at least one chamfer portion on both ends of the folded sheet element.

The details of one or more embodiments are set forth in the accompanying drawings and the description below. Other features will be apparent from the description and drawings, and from the claims.

### BRIEF DESCRIPTION OF THE DRAWINGS

In the accompanying drawings:
- Figure 1 illustrates a perspective front view of an embodiment of a battery charger according to the invention;
- Figure 2 illustrates cross-sectional view of the battery charger of Figure 1;
- Figure 3 illustrates a partial perspective view of a male electrical connector connecting a first printed circuit board and a second printed circuit board of the battery charger of Figure 1;
- Figure 4 illustrates an embodiment of a male electrical connector according to the invention;
- Figures 5 to 9 illustrate a first method of fabricating a male electrical connector according to the invention;
- Figures 10 and 11 illustrate a second method of fabricating a male electrical connector according to the invention;
- Figure 12 illustrates another partial perspective view of two male electrical connectors connecting two printed circuit boards of the battery charger of Figure 1.

### DETAILED DESCRIPTION

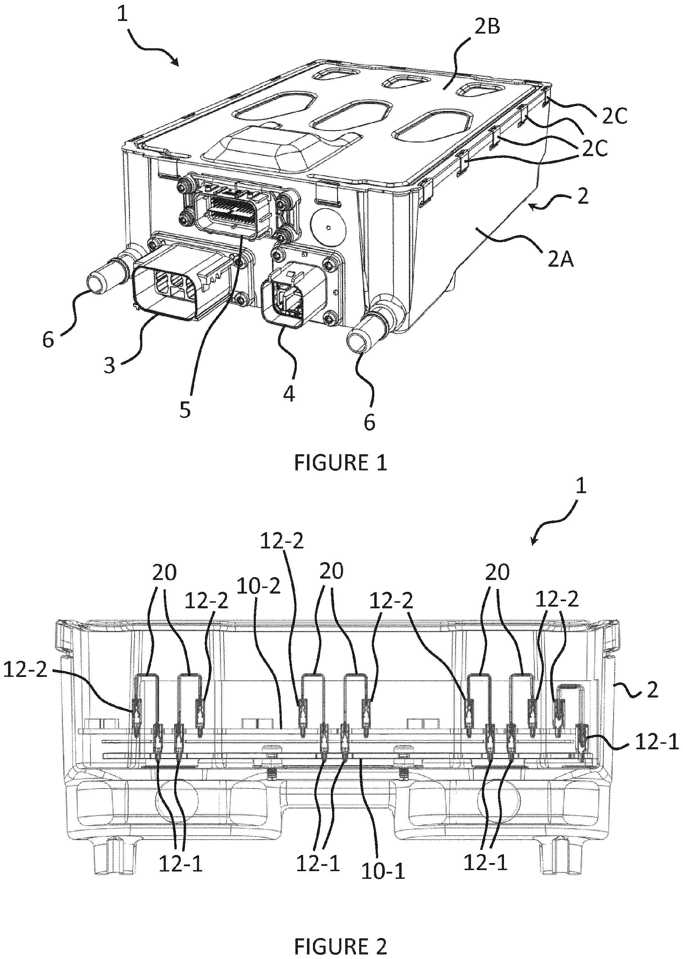

An embodiment of a voltage converter according to the invention will now be described in reference to Figures 1 and 2. In this example, the voltage converter is a battery charger 1 configured for being mounted onboard an electrical or hybrid vehicle. However, the invention could apply to any type of electrical equipment, in particular any type of voltage converter, in particular any type of battery charger that allows e.g. charging a DC battery using an AC power supply source.

In the preferred embodiment described hereafter, the battery charger 1 is configured for charging a battery from an AC power supply source such as e.g. a domestic or public grid. In other words, the battery charger 1 is configured for receiving power for an AC power supply source and converting said power into a DC power supply source to charge a battery. The received power may be a single-phase AC current or several multi-phase AC currents (e.g. three phase-shifted AC currents).

Figures 1 to 2 illustrate an embodiment of battery charger 1 according to the invention. The battery charger 1 comprises a housing 2 for example made of a metal or a plastic material. The housing 2 comprises a bottom wall (not shown), a rectangular side wall 2A, coming as one-piece element, and a cover 2B, fixed on the side wall 2A using attaching clips 2C in order to close said housing 2. In this example, the battery charger 1 comprises an AC connector 3 and a DC connector 4. The AC connector 3 allows receiving the at least one AC current delivered by the power supply source (not shown). The DC connector 4 allows delivering the DC current generated by the battery charger 1 to a battery (not shown). For example, such battery may be a high-voltage battery, i.e. greater than 60 V. In this non-limitative example, the battery charger 1 further comprises a signal connector 5 and tubes 6 configured for allowing the circulation of a cooling fluid.

In reference to Figure 2, the battery charger 1 comprises a first printed circuit board 10-1 and a second printed circuit board 10-2 mounted in the housing 2. In another embodiment, the battery charger 1 could comprise more than two printed circuit boards 10-1, 10-2 without limiting the scope of the present invention.

The second circuit board 10-2 is arranged above the first printed circuit board 10-1. The first printed circuit board 10-1 and the second printed circuit board 10-2 comprise both electrical and/or electronic components arranged for converting at least one alternating current into a direct current.

For example, such electrical and/or electronic components may be filters used for filtering AC current signals received from the power source via the AC connector 3 or for filtering noise in the DC current signal, e.g. delivered to the battery of the vehicle via the DC connector 4, capacitors used for stabilizing the internal DC link intermediate voltage, magnetic elements (transformers for transferring electrical energy of an AC current received from the power source through the AC connector 3 into electrical energy of the DC current delivered through the DC connector 4, e.g. to a battery of a vehicle, diodes for reducing peak currents and generating current in the shape of a sinus curve over a period, etc.). The signal connector 5 is optional and is configured for exchanging signals between the first printed circuit board 10-1, the second printed circuit board 10-2 and an external equipment (not shown), e.g. such as a test or a control equipment.

The electrical connections between the first printed circuit board 10-1 and the second printed circuit board 10-2 may be adapted depending on the configuration of the battery charger 1. As illustrated on Figure 2 and according to the invention, some electrical connections between the first printed circuit board 10-1 and the second printed circuit board 10-2 are realized using female electrical connectors 12-1, 12-2 and male electrical connectors 20.

In this example, half of the female electrical connectors 12-1 are mounted on the first printed circuit board 10-1 and the other half of the female electrical connectors 12-2 are mounted on the second printed circuit board 10-2. Each male electrical connectors 20 electrically connects a female electrical connectors 12-1 of the first printed circuit board 10-1 and a female electrical connectors 12-2 of the second printed circuit board 10-2.

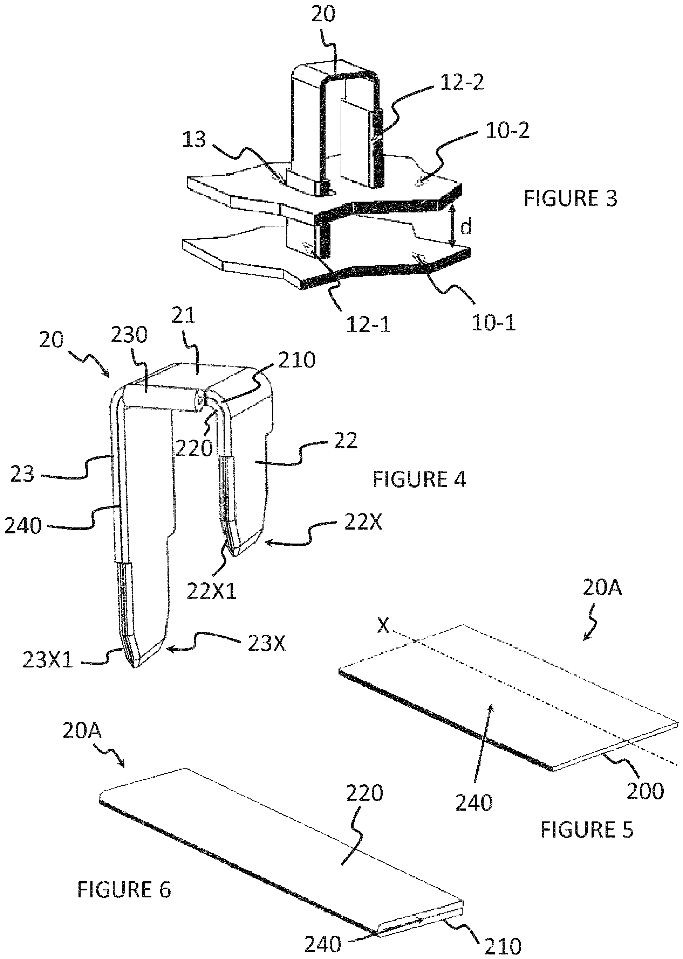

Figure 3 illustrates a close view of a connection of a male electrical connector 20 with a female electrical connector 12-1 of the first printed circuit board 10-1 and a female electrical connectors 12-2 of the second printed circuit board 10-2.

In order to realize such a connection, the second printed circuit board 10-2, arranged on top of the first printed circuit board 10-1, comprises an opening 13 and the male electrical connector 20 connects the female electrical connector 12-1 of the first printed circuit board 10-1 and the female electrical connectors 12-2 of the second printed circuit board 10-2 through said opening 13.

To allow such an electrical connection, as illustrated on Figure 4, the male electrical connector 20 is a metallic one-piece U-shaped element, for example made of nickel plating brass.

The male electrical connector 20 comprises a central portion 21 and two leg portions 22, 23 extending perpendicularly to said central portion 21. The male electrical connector 20 comprises a shorter leg portion 22 and a longer leg portion 23. Such a length difference allows the longer leg portion 23 to connect to the female electrical connector 12-1 of the first printed circuit board 10-1 and the shorter leg portion 22 to connect to the female electrical connector 12-2 of the second printed circuit board 10-2, as illustrated in Figure 3. The length difference defines the spacing d between the first printed circuit board 10-1 and the second printed circuit board 10-2.

Still in reference to Figure 4, the central portion 21 and the two leg portions 22, 23 are substantially flat and have a rectangular cross-section. The male electrical connector 20 comprises two electrically conducting layers 210, 220. One electrically conducting layer 210 is external and the other electrically conducting layer 220 is internal. The external electrically conducting layer 210 is connected to the internal electrically conducting layer 220 through a connecting part 230.

The male electrical connector also comprises an electrically isolating layer 240 arranged between the external electrically conducting layer 210 and the internal electrically conducting layer 220 for conducting high intensity currents (e.g. up to 28 A rms / 39,48 A peak), in particular at high frequency (e.g. around or above 160 kHz).

Each leg portion 22, 23 comprises respectively a free first end 22X and a free second end 23X. Each of the first end 22X and second end 23X comprises at least one chamfered portion 22X1, 23X1 for inserting easily each free end 22X, 23X of the male electrical connector 20 in a corresponding female electrical connector 12-1, 12-2.

Two exemplary embodiments of a method for fabricating a male electrical connector 20 will now be described in reference to Figures 5 to 12.

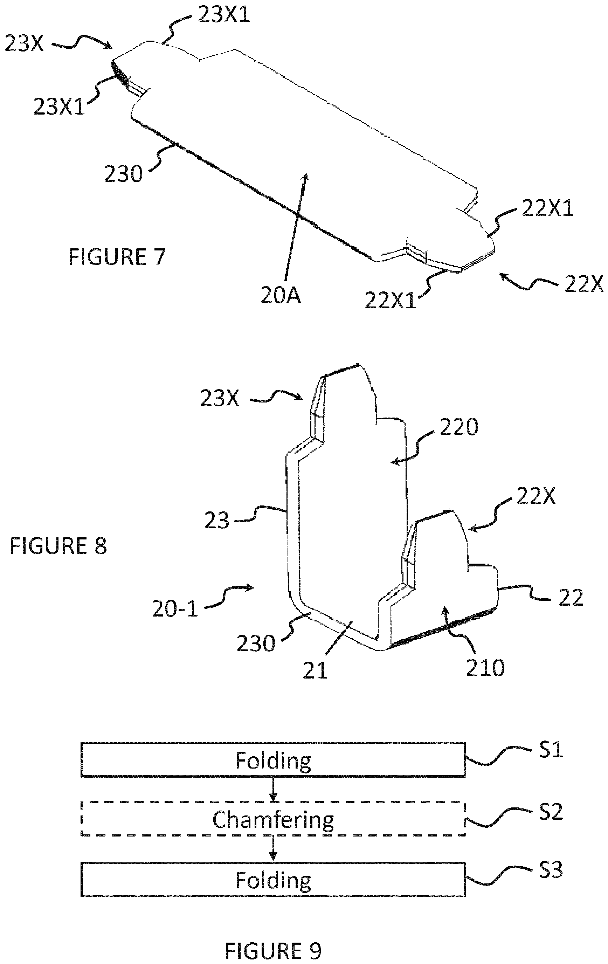

In a first example illustrated on Figures 5 to 9, a sheet element 20A made of a rectangular electrically conducting sheet 200 and of a rectangular isolating layer 240 arranged on top of said rectangular current conducting sheet 200 (Figure 5) is folded in half along the longitudinal direction X of said sheet element 20A, in a step S1 (Figure 9).

As shown on Figure 6, the folded sheet element 20A comprises an external electrically conducting layer 210, an internal electrically conducting layer 220, the electrically isolating layer 240 being arranged between said external electrically conducting layer 210 and said internal electrically conducting layer 220.

As shown on Figure 7, the folded sheet element 20A is then chamfered in a step S2 so as to defined a first free end 22X comprising two chamfered portions 22X1 and a second free end 23X comprising two chamfered portions 23X1.

As shown on Figure 8, the folded sheet element 20A is folded again, in a step S3, so as to form a U-shaped male electrical connector 20-1 comprising a central portion 21 and two bent leg portions 22, 23 with chamfered free end 22X, 23X.

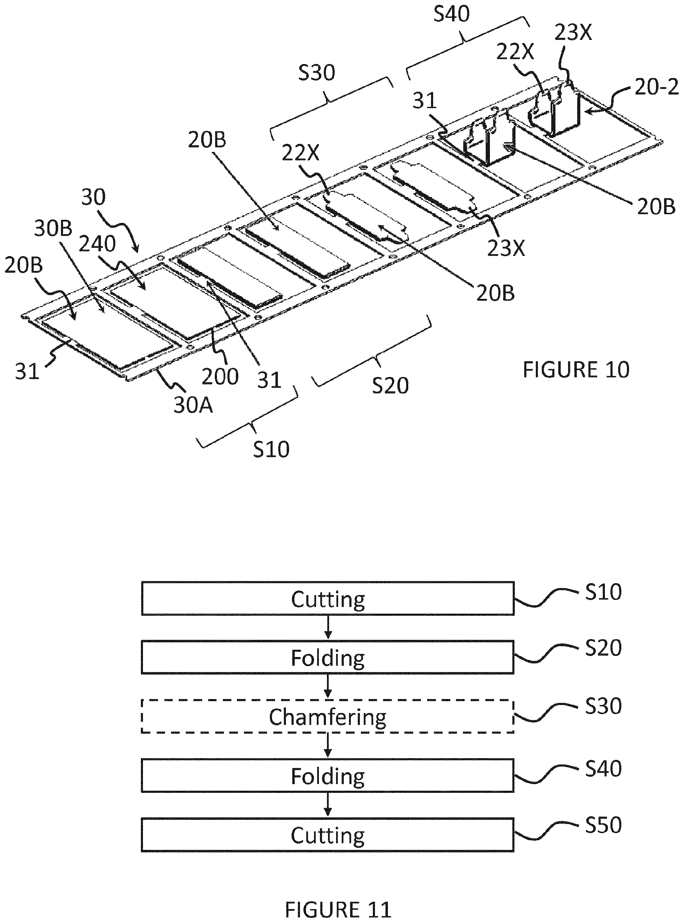

A second example is illustrated on Figures 10 and 11. Figure 10 illustrates the first five steps S10, S20, S30, S40, S50 of this second embodiment. In this embodiment, the male electrical connector 20-2 is produced from a plate 30 comprising a metallic layer 30A and an isolating layer 30B arranged on the top surface of the metallic layer 30A, as illustrated on Figure 10.

In a first step S10, the plate 30 is cut so as to form a sheet element 20B comprising a electrically conducting sheet 200 and an isolating layer 240 arranged on top of said rectangular current conducting sheet 200. The sheet element 20B is connected to the frame of the metal plate 30A through a connection portion 31.

In a step S20, the sheet element 20B is folded in half along the longitudinal direction of said sheet element 20B.

The folded sheet element 20B is then chamfered in a step S30 so as to define a first chamfered free end 22X and a second chamfered free end 23X.

In a step S40, the folded sheet element 20B, which is still attached to the frame of the plate 30 via the connection portion 31, is folded again so as to form a U-shaped male electrical connector 20-2.

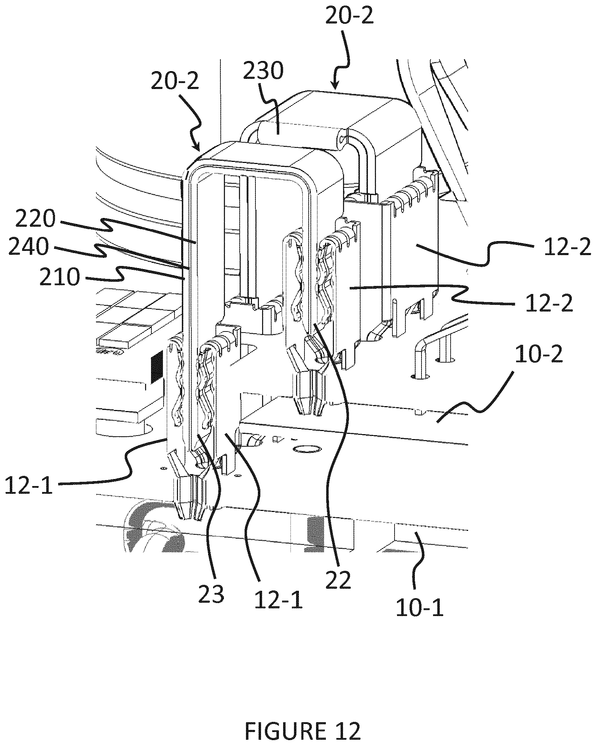

In a step S50 (figure 11), the connection portion 31 is cut out in order to detach the male electrical connector 20-2, while keeping a connecting part 230 between the external electrically conducting layer 210 and the internal electrically conducting layer 220 as shown on figure 12.

Figure 12 illustrates two male electrical connectors 20-2 electrically connecting a first printed circuit board 10-1 and a second printed circuit board 10-2. For a given male electrical connector 20-2, the end of the longer leg portion 23 is inserted into a female electrical connector 12-1 mounted on the first printed circuit board 10-1 and the end of the shorter leg portion 22 is inserted into a female electrical connector 12-2 mounted on the second printed circuit board 10-2 in order to electrically connect the first printed circuit board 10-1 and the second printed circuit board 10-2. In addition to variations and modifications in the component parts and/or arrangements, alternative uses will also be apparent to those skilled in the art. In particular, although the invention has been described in relation with the example of an on board battery charger, the invention also applies to a DC/DC converter configured to charge a low voltage battery from a high voltage battery on board a vehicle.

## Claims

1. A male electrical connector (20, 20-1, 20-2) configured for electrically connecting a first printed circuit board (10-1) and a second printed circuit board (10-2) of a voltage converter (1), said male electrical connector (20, 20-1, 20-2) being U-shaped and comprising a first end (22X) and a second end (23X), said first end (22X) and said second end (23X) being configured respectively for being connected to a female electrical connector (12-1) mounted on the first printed circuit board (10-1) and to a female electrical connector (12-2) mounted on the second printed circuit board (10-2); the male electrical connector (20, 20-1, 20-2) being **characterized in** comprising an external electrically conducting layer (210), an internal electrically conducting layer (220), and an electrically isolating layer (240) arranged between the external electrically conducting layer (210) and the internal electrically conducting layer (220).

2. The male electrical connector (20, 20-1, 20-2) according to claim 1, said male electrical connector (20, 20-1, 20-2) comprising a central portion (21) and two leg portions (22, 23) extending perpendicularly to said central portion (21).

3. The male electrical connector (20, 20-1, 20-2) according to the preceding claim, wherein the central portion (21) and the two leg portions (22, 23) have a rectangular cross-section.

4. The male electrical connector (20, 20-1, 20-2) according to any of claims 2 and 3, wherein the two leg portions (22, 23) are flat.

5. The male electrical connector (20, 20-1, 20-2) according to the preceding claim, wherein the external electrically conducting layer (210) is connected to the internal electrically conducting layer (220) through a connecting part (230).

6. The male electrical connector (20, 20-1, 20-2) according to any of claims 2 to 5, wherein the two leg portions (22, 23) have a different length.

7. The male electrical connector (20, 20-1, 20-2) according to any of the preceding claims, wherein each of the first end (22X) and the second end (23X) of the leg portions comprises at least one chamfer portion (22X1, 23X1).

8. The male electrical connector (20, 20-1, 20-2) according to any of the preceding claims, wherein the male electrical connector (20, 20-1, 20-2) is a one-piece element.

9. The male electrical connector (20, 20-1, 20-2) according to any of the preceding claims, wherein the male electrical connector (20, 20-1, 20-2) is made of a metal material.

10. A voltage converter (1) for converting at least one alternating phase current into a direct current, in particular for use in an electrical or hybrid vehicle, said voltage converter (1) comprising a housing (2) and at least a first printed circuit board (10-1) and a second printed circuit board (10-2), said second printed circuit board (10-2) being arranged on top of said first printed circuit board (10-1) into said housing (2), each of the first printed circuit board (10-1) and the second printed circuit board (10-2) comprising a female electrical connector (12-1, 12-2), the voltage converter (1) comprising at least one male electrical connector (20, 20-1, 20-2), according to any of the preceding claims, electrically connecting the female electrical connector (12-1) of the first printed circuit board (10-1) and the female electrical connector (12-2) of the second printed circuit board (10-2).

11. The voltage converter (1) according to the preceding claim, wherein an opening (13) is formed in the second printed circuit board (10-2) and the male electrical connector (20, 20-1, 20-2) electrically connects the female electrical connector (12-1) of the first printed circuit board (10-1) and the female electrical connector (12-2) of the second printed circuit board (10-2) through said opening (13).

12. The voltage converter (1) according to claim 10 or 11, wherein the assembly comprising the first printed circuit board (10-1) and the second printed circuit board (10-2) is configured for converting an alternating phase current into a direct current.

13. A method for manufacturing a male electrical connector (20, 20-1, 20-2) according to any of claims 1 to 9, said method comprising the steps of:
- folding (S1, S20) in half a sheet element (20A, 20B) comprising an electrically isolating layer (240) arranged on top of an electrically conducting sheet (200) so as to obtain a folded sheet element comprising two electrically conducting layers (210, 220) and an electrically isolating layer (240) arranged between said two electrically conducting layers (210, 220),
- folding the folded sheet element into a U-shaped male electrical connector (20, 20-1, 20-2) comprising a first end (22X) and a second end (23X), said first end (22X) and said second end (23X) being configured respectively for being connected to a female electrical connector (12-1 ) mounted on a first printed circuit board (10-1) and to a female electrical connector (12-2) mounted on a second printed circuit board (10-2) of a voltage converter (1).

## Patentansprüche

1. Männlicher elektrischer Verbinder (20, 20-1, 20-2), der so ausgebildet ist, dass er eine erste Leiterplatte (10-1) und eine zweite Leiterplatte (10-2) eines Spannungswandlers (1) elektrisch verbindet, wobei der männliche elektrische Verbinder (20, 20-1, 20-2) U-förmig ist und ein erstes Ende (22X) und ein zweites Ende (23X) aufweist, wobei das erste Ende (22X) und das zweite Ende (23X) so ausgebildet sind, dass sie mit einem weiblichen elektrischen Verbinder (12-1), der auf der ersten Leiterplatte (10-1) montiert ist, bzw. mit einem weiblichen elektrischen Verbinder (12-2), der auf der zweiten Leiterplatte (10-2) montiert ist, verbunden werden können; wobei der männliche elektrische Verbinder (20, 20-1, 20-2) **dadurch gekennzeichnet ist, dass** er neben einer äußeren elektrisch leitenden Schicht (210) und einer inneren elektrisch leitenden Schicht (220) noch eine elektrisch isolierende Schicht (240) aufweist, die zwischen der äußeren elektrisch leitenden Schicht (210) und der inneren elektrisch leitenden Schicht (220) angeordnet ist.

2. Männlicher elektrischer Verbinder (20, 20-1, 20-2) gemäß Anspruch 1, wobei der männliche elektrische Verbinder (20, 20-1, 20-2) einen Mittelteil (21) und zwei Schenkelteile (22, 23) umfasst, die sich senkrecht zu dem Mittelteil (21) erstrecken.

3. Männlicher elektrischer Verbinder (20, 20-1, 20-2) gemäß dem vorhergehenden Anspruch, wobei der Mittelteil (21) und die beiden Schenkelteile (22, 23) einen rechteckigen Querschnitt aufweisen.

4. Männlicher elektrischer Verbinder (20, 20-1, 20-2) gemäß einem der Ansprüche 2 und 3, wobei die beiden Schenkelteile (22, 23) flach sind.

5. Männlicher elektrischer Verbinder (20, 20-1, 20-2) gemäß dem vorhergehenden Anspruch, wobei die äußere elektrisch leitende Schicht (210) über ein Verbindungsteil (230) mit der inneren elektrisch leitenden Schicht (220) verbunden ist.

6. Männlicher elektrischer Verbinder (20, 20-1, 20-2) gemäß einem der Ansprüche 2 bis 5, wobei die beiden Schenkelteile (22, 23) eine unterschiedliche Länge haben.

7. Männlicher elektrischer Verbinder (20, 20-1, 20-2) gemäß einem der vorhergehenden Ansprüche, wobei sowohl das erste Ende (22X) als auch das zweite Ende (23X) der Schenkelteile mindestens einen Abschrägungsteil (22X1, 23X1) aufweist.

8. Männlicher elektrischer Verbinder (20, 20-1, 20-2) gemäß einem der vorhergehenden Ansprüche, wobei der männliche elektrische Verbinder (20, 20-1, 20-2) ein einteiliges Element ist.

9. Männlicher elektrischer Verbinder (20, 20-1, 20-2) gemäß einem der vorhergehenden Ansprüche, wobei der männliche elektrische Verbinder (20, 20-1, 20-2) aus einem Metallmaterial besteht.

10. Spannungswandler (1) zur Umwandlung mindestens eines Phasenwechselstroms in einen Gleichstrom, insbesondere zur Verwendung in einem Elektro- oder Hybridfahrzeug, wobei der Spannungswandler (1) ein Gehäuse (2) und mindestens eine erste Leiterplatte (10-1) und eine zweite Leiterplatte (10-2) aufweist, wobei die zweite Leiterplatte (10-2) auf der ersten Leiterplatte (10-1) in dem Gehäuse (2) angeordnet ist, wobei sowohl die erste Leiterplatte (10-1) als auch die zweite Leiterplatte (10-2) einen weiblichen elektrischen Verbinder (12-1, 12-2) aufweisen, der Spannungswandler (1) mindestens einen männlichen elektrischen Verbinder (20, 20-1, 20-2) gemäß einem der vorhergehenden Ansprüche aufweist, der den weiblichen elektrischen Verbinder (12-1) der ersten Leiterplatte (10-1) und den weiblichen elektrischen Verbinder (12-2) der zweiten Leiterplatte (10-2) elektrisch verbindet.

11. Spannungswandler (1) gemäß dem vorhergehenden Anspruch, wobei eine Öffnung (13) in der zweiten Leiterplatte (10-2) ausgebildet ist und der männliche elektrische Verbinder (20, 20-1, 20-2) den weiblichen elektrischen Verbinder (12-1) der ersten Leiterplatte (10-1) und den weiblichen elektrischen Verbinder (12-2) der zweiten Leiterplatte (10-2) durch die Öffnung (13) elektrisch verbindet.

12. Spannungswandler (1) gemäß Anspruch 10 oder 11, wobei die Baugruppe, die die erste Leiterplatte (10-1) und die zweite Leiterplatte (10-2) aufweist, für die Umwandlung eines Phasenwechselstroms in einen Gleichstrom ausgebildet ist.

13. Verfahren zur Herstellung eines männlichen elektrischen Verbinders (20, 20-1, 20-2) gemäß einem der Ansprüche 1 bis 9, wobei das Verfahren die folgenden Schritte umfasst:
- Falten (S1, S20), in der Mitte, eines Plattenelements (20A, 20B), das eine elektrisch isolierende Schicht (240) aufweist, die oben auf einer elektrisch leitenden Platte (200) angeordnet ist, um ein gefaltetes Plattenelement zu erhalten, das zwei elektrisch leitende Schichten (210, 220) und eine elektrisch isolierende Schicht (240) aufweist, die zwischen den beiden elektrisch leitenden Schichten (210, 220) angeordnet ist,
- Falten des gefalteten Plattenelements zu einem U-förmigen männlichen elektrischen Verbinder (20, 20-1, 20-2), der ein erstes Ende (22X) und ein zweites Ende (23X) aufweist, wobei das erste Ende (22X) und das zweite Ende (23X) jeweils so ausgebildet sind, dass sie mit einem weiblichen elektrischen Verbinder (12-1), der auf einer ersten Leiterplatte (10-1) montiert ist, und mit einem weiblichen elektrischen Verbinder (12-2), der auf einer zweiten Leiterplatte (10-2) eines Spannungswandlers (1) montiert ist, verbunden werden können.

## Revendications

1. Connecteur électrique mâle (20, 20-1, 20-2) configuré pour connecter électriquement une première carte de circuit imprimé (10-1) et une deuxième carte de circuit imprimé (10-2) d'un convertisseur de tension (1), ledit connecteur électrique mâle (20, 20-1, 20-2) étant en forme de U et comprenant une première extrémité (22X) et une deuxième extrémité (23X), ladite première extrémité (22X) et ladite deuxième extrémité (23X) étant configurées pour être connectées respectivement à un connecteur électrique femelle (12-1) fixé sur la première carte de circuit imprimé (10-1) et à un connecteur électrique femelle (12-2) fixé sur la deuxième carte de circuit imprimé (10-2) ; le connecteur électrique mâle (20, 20-1, 20-2) étant **caractérisé en ce qu'**il comprend une couche électriquement conductrice externe (210), une couche électriquement conductrice interne (220), et une couche électriquement isolante (240) placée entre la couche électriquement conductrice externe (210) et la couche électriquement conductrice interne (220).

2. Connecteur électrique mâle (20, 20-1, 20-2) selon la revendication 1, ledit connecteur électrique mâle (20, 20-1, 20-2) comprenant une portion centrale (21) et deux portions pattes (22, 23) s'étendant perpendiculairement à ladite portion centrale (21).

3. Connecteur électrique mâle (20, 20-1, 20-2) selon la revendication précédente, la portion centrale (21) et les deux portions pattes (22, 23) ayant une section transversale rectangulaire.

4. Connecteur électrique mâle (20, 20-1, 20-2) selon l'une quelconque des revendications 2 et 3, les deux portions pattes (22, 23) étant plates.

5. Connecteur électrique mâle (20, 20-1, 20-2) selon la revendication précédente, la couche électriquement conductrice externe (210) étant connectée à la couche électriquement conductrice interne (220) via une partie de connexion (230).

6. Connecteur électrique mâle (20, 20-1, 20-2) selon l'une quelconque des revendications 2 à 5, les deux portions pattes (22, 23) ayant une longueur différente.

7. Connecteur électrique mâle (20, 20-1, 20-2) selon l'une quelconque des revendications précédentes, chacune de la première extrémité (22X) et de la deuxième extrémité (23X) des portions pattes comprenant au moins une portion en biseau (22X1, 23X1).

8. Connecteur électrique mâle (20, 20-1, 20-2) selon l'une quelconque des revendications précédentes, le connecteur électrique mâle (20, 20-1, 20-2) étant un élément en une pièce.

9. Connecteur électrique mâle (20, 20-1, 20-2) selon l'une quelconque des revendications précédentes, le connecteur électrique mâle (20, 20-1, 20-2) étant fait d'un matériau métallique.

10. Convertisseur de tension (1) destiné à convertir au moins un courant de phase alternatif en un courant continu, en particulier pour une utilisation dans un véhicule électrique ou hybride, ledit convertisseur de tension (1) comprenant un boitier (2) et au moins une première carte de circuit imprimé (10-1) et une deuxième carte de circuit imprimé (10-2), ladite deuxième carte de circuit imprimé (10-2) étant placée au-dessus de ladite première carte de circuit imprimé (10-1) dans ledit boitier (2), chacune de la première carte de circuit imprimé (10-1) et de la deuxième carte de circuit imprimé (10-2) comprenant un connecteur électrique femelle (12-1, 12-2), le convertisseur de tension (1) comprenant au moins un connecteur électrique mâle (20, 20-1, 20-2), selon l'une quelconque des revendications précédentes, connectant électriquement le connecteur électrique femelle (12-1) de la première carte de circuit imprimé (10-1) et le connecteur électrique femelle (12-2) de la deuxième carte de circuit imprimé (10-2).

11. Convertisseur de tension (1) selon la revendication précédente, une ouverture (13) étant formée dans la deuxième carte de circuit imprimé (10-2) et le connecteur électrique mâle (20, 20-1, 20-2) connectant électriquement le connecteur électrique femelle (12-1) de la première carte de circuit imprimé (10-1) et le connecteur électrique femelle (12-2) de la deuxième carte de circuit imprimé (10-2) via ladite ouverture (13).

12. Convertisseur de tension (1) selon la revendication 10 ou 11, l'assemblage, comprenant la première carte de circuit imprimé (10-1) et la deuxième carte de circuit imprimé (10-2), étant configuré pour convertir un courant de phase alternatif en un courant continu.

13. Procédé de fabrication d'un connecteur électrique mâle (20, 20-1, 20-2) selon l'une quelconque des revendications 1 à 9, ledit procédé comprenant les étapes de :
- pliage (S1, S20) en deux d'un élément feuille (20A, 20B) comprenant une couche électriquement isolante (240) placée au-dessus d'une feuille électriquement conductrice (200) de manière à obtenir un élément feuille plié comprenant deux couches électriquement conductrices (210, 220) et une couche électriquement isolante (240) placée entre lesdites deux couches électriquement conductrices (210, 220),
- pliage de l'élément feuille plié en un connecteur électrique mâle (20, 20-1, 20-2) en forme de U comprenant une première extrémité (22X) et une deuxième extrémité (23X), ladite première extrémité (22X) et ladite deuxième extrémité (23X) étant configurées pour être connectées respectivement à un connecteur électrique femelle (12-1) fixé sur une première carte de circuit imprimé (10-1) et à un connecteur électrique femelle (12-2) fixé sur une deuxième carte de circuit imprimé (10-2) d'un convertisseur de tension (1).
